# EUROPÄISCHE PATENTSCHRIFT

(11) **EP 1 541 878 B1**
(45) Veröffentlichungstag und Bekanntmachung des Hinweises auf die Patenterteilung: **22.02.2012**
(21) Anmeldenummer: 04106420.5
(22) Anmeldetag: 09.12.2004
(51) Int. Cl.: F16B 37/04, F16B 37/02, F16B 7/18

(54) **Befestigungssystem**
Fastening system
Système de fixation

(30) Priorität: 11.12.2003 DE 10357844
(43) Veröffentlichungstag der Anmeldung: 15.06.2005
(73) Patentinhaber: HILTI Aktiengesellschaft, 9494 Schaan (LI)
(72) Erfinder: Hoffmann, Armin, 86899, Landsberg (DE)
(74) Vertreter: Wildi, Roland

(56) Entgegenhaltungen:
- CH-A- 378 022
- DE-U1- 9 005 168
- US-A- 5 116 161

## Beschreibung

### Technisches Gebiet

Die Erfindung betrifft ein Befestigungssystem zum Befestigen eines ersten Bauteils an einem zweiten Bauteil, insbesondere zum Befestigen eines ersten Bauteils an einem Träger eines Montagesystems. Das Befestigungssystem umfasst ein, ein Drehmomentübertragungsmittel aufweisendes Schraubmittel, wobei das Schraubmittel zumindest bereichsweise einen ersten Gewindeabschnitt aufweist, ein Anlageelement zur Anlage an einem der Bauteile, wobei das Anlageelement eine Durchführöffnung zum Durchführen des Schraubmittels aufweist, und ein Gegenschraubmittel mit einem zweiten Gewindeabschnitt, der eine Befestigungsachse definiert und der mit dem ersten Gewindeabschnitt des Schraubmittels in Eingriff bringbar ist. Weiter betrifft die Erfindung ein Gegenschraubmittel, insbesondere für ein solches Befestigungssystem. Ein solches System ist aus der US-A-5 116 161 bekannt.

### Stand der Technik

Im industriellen Leitungsbau und insbesondere im industriellen Rohrleitungsbau werden Stahlkonstruktionen aus Stahlbauelementen erstellt, welche skelettartig ein Traggerüst für die Leitungen bilden. Üblicherweise kommen Träger eines Montagesystems, welche beispielsweise einen geschlossenen Querschnitt aufweisen, oder Standardträger zur Anwendung, die mittels Verbindungsteilen oder Anschlusselementen miteinander zum gewünschten Traggerüst verbunden werden.

An den Trägern müssen neben Anschlusselemente für andere Träger auch Anschlusselemente für die Leitungen oder Befestigungen angeordnet werden. Für die Verlegung von Leitungen im Allgemeinen und besonders von Rohrleitungen kommen oftmals C-förmige Montageschienen zum Einsatz, an denen mittels so genannter Schienenmuttern Rohrschellen und andere Befestigungselemente für die Leitungen schnell und kostengünstig fixiert werden können.

Die Träger, insbesondere die Träger eines Montagesystems, sind oftmals mit Öffnungen in einem vordefinierten Abstand versehen, in denen weitere Bauteile mittels einer Schraubverbindung befestigt werden. Die Schraubverbindungen umfassen üblicherweise eine als Schraubmittel dienende Schraube, Unterlagsscheiben und eine als Gegenschraubmittel dienende Mutter. Die Unterlagsscheibe wird über den, den ersten Gewindeabschnitt aufweisenden Schraubenschaft der Schraube geschoben und anschliessend der Schraubenschaft durch das zu befestigende Bauteil und durch die Öffnung am Träger hindurchgeführt. Dann wird eine zweite Unterlagsscheibe sowie die, den zweiten Gewindeabschnitt aufweisende Mutter an dem freien Ende des Schraubenschafts angeordnet. Mittels Betätigung der Schraube bei gleichzeitigem Gegenhalten der Mutter wird die Schraubverbindung verspannt.

Nachteilig an dieser bekannten Lösung ist, dass bei einem geschlossenen Hohlprofil oder bei einem nur einseitig zugänglichen Träger die herkömmlichen Schraubverbindungen nicht erstellt werden können, da ein Gegenhalten der Mutter zumeist nicht möglich ist.

Um eine Befestigung von Bauteilen auch bei geschlossenen Hohlprofilen oder bei nur einseitig zugänglichen Trägern zu ermöglichen sind so genannte Einpressmuttern bekannt, welche in die Öffnungen am Träger gesteckt und mit einem Spezialwerkzeug verpresst werden. Diese Einpressmuttern weisen ein Innengewinde auf, in das ein Schraubmittel zur Befestigung eines Bauteils am Träger eingreifen kann.

Nachteilig an dieser bekannten Lösung ist, dass die Öffnungen im Träger auf die Aussenabmessungen der Einpressmutter abgestimmt sein müssen, damit eine Verdrehsicherung der Einpressmutter am Träger gegeben ist. Das Setzen und Verpressen der Einpressmuttern am Träger stellt einen zusätzlichen Montageaufwand dar, welcher unter bestimmten Randbedingungen, wie z. B. in grosser Höhe und unter widrigen Umständen am Montageort, einen nicht zu unterschätzenden Aufwand darstellt. Bei einer Demontage oder Änderung der Leitungsführung oder der Tragkonstruktion verbleiben die Einpressmuttern am Träger, was beispielsweise aus konstruktiven und/oder ästhetischen Gründen oftmals nicht erwünscht ist.

### Darstellung der Erfindung

Aufgabe der Erfindung ist es, ein einfaches Befestigungssystem zur Befestigung eines ersten Bauteils an einem zweiten Bauteil zu schaffen, das einfach zu montieren, flexibel in der Anwendung und kostengünstig herstellbar ist. Eine weitere Aufgabe der Erfindung ist es, ein einfaches, flexibles und kostengünstig herstellbares Gegenschraubmittel zu schaffen.

Die Aufgaben sind durch die Merkmale der unabhängigen Ansprüche gelöst. Vorteilhafte Weiterbildungen sind in den Unteransprüchen dargelegt.

Gemäss der Erfindung weist das Gegenschraubmittel einen einzigen Hintergreifabschnitt und einen einzigen Anlageabschnitt auf, wobei der Hintergreifabschnitt in Richtung der Befestigungsachse zu dem Anlageabschnitt beabstandet und mit dem Anlageabschnitt über einen Verbindungsabschnitt verbunden ist.

Der Hintergreifabschnitt des Gegenschraubmittels ist in die Öffnung des ersten Bauteils und in die Öffnung des zweiten Bauteils, z. B. in die Öffnungen eines Trägers eines Montagesystems, der einen geschlossenen Hohlquerschnitt aufweist, einführbar. Der Anlageabschnitt ist in seinen Abmessungen derart ausgestaltet, dass dieser beispielsweise an dem zu befestigenden ersten Bauteil anliegt und das Gegenschraubmittel nicht durch die Öffnungen in das zweite Bauteil fallen kann. Das erfindungsgemässe Befestigungssystem ist neben nur einseitig zugänglichen, mit Öffnungen versehenen Trägern auch bei jeder anderen Art und Ausgestaltung eines Trägers anwendbar, sofern dieser mit Öffnungen versehen ist, in die der Hintergreifabschnitt des Gegenschraubmittels einführbar ist. Der Abstand des Hintergreifabschnitts zu dem Anlageabschnitt entspricht zur Befestigung eines ersten Bauteils an einem zweiten Bauteil vorzugsweise zumindest der Summe aus der Wandungsstärke des ersten Bauteils und der der Wandungsstärke des zweiten Bauteils.

Das erste Bauteil weist zumindest an dem Elementabschnitt, welcher an dem zweiten Bauteil zu liegen kommt, eine Durchführöffnung auf, die vorteilhafterweise als Langloch ausgebildet ist. Bei ersten Bauteilen, die mehrere Elementabschnitte aufweisen, sind zu deren flexiblen Verwendung vorzugsweise an jedem der Elementabschnitte Durchführöffnungen ausgebildet. Zur Montage des erfindungsgemässen Befestigungssytems wird das erste Bauteil ausgerichtet mit seiner Öffnung über eine der Öffnungen am zweiten Bauteil angeordnet. Das Hintergreifteil des Gegenschraubmittels wird durch die beiden Öffnungen eingeführt. Anschliessend wird das Anlageelement des Befestigungssystems angeordnet und durch dessen Durchführöffnung wird das Schraubmittel hindurchgeführt, wobei der erste Gewindeabschnitt an dem Schraubmittel mit dem zweiten Gewindeabschnitt des Gegenschraubmittels in Eingriff gebracht wird. Das zusammengesetzte Befestigungssystem wird seitlich verschoben, bis der Verbindungsabschnitt des Gegenschraubmittels an einen Rand der Öffnung im zweiten Bauteil zu liegen kommt. Mittels eines geeigneten Mittels, z. B. mittels eines Schraubenschlüssels der beispielsweise an einem als Drehübertragungsmittel dienenden Sechskant-Schraubenkopf des Schraubmittels angreift, wird das Schraubmittel betätigt und das erfindungsgemässe Befestigungssystem verspannt. Dabei wird das Gegenschraubmittel in Richtung des, sich am ersten oder zweiten Bauteil abstützenden Anlageelement gezogen, wobei das erste Bauteil an dem zweiten Bauteil befestigt, beziehungsweise fixiert wird.

Das Schraubmittel ist vorzugsweise eine Schraube mit einem, als erster Gewindeabschnitt dienendem Aussengewinde und mit einem Schraubenkopf, dessen Aussendurchmesser grösser als der Innendurchmesser der Durchführöffnung im Anlageelement ist. An dem Schraubenkopf kann ein, den Aussendurchmesser des Schraubenkopfs vergrössernder Bund oder eine entsprechende Unterlagsscheibe angeordnet sein, beziehungsweise werden.

Der Anlageabschnitt des Gegenschraubmittels ist vorzugsweise im Wesentlichen als Mutter ausgebildet, wobei der zweite Gewindeabschnitt ein, in einer Öffnung angeordnetes Innengewinde ist. In einer Variante dazu, ist an dem Anlageabschnitt des Gegenschraubmittels ein Abschnitt mit einem, als zweiter Gewindeabschnitt dienendem Aussengewinde vorgesehen, an welchem ein zumindest bereichsweise hülsenartig ausgebildetes Schraubmittel, mit einem als erster Gewindeabschnitt ausgebildetem Innengewinde ausgeformt ist, welches mit dem Aussengewinde des Gegenschraubmittels in Eingriff bringbar ist.

Das erfindungsgemässe Befestigungssystem wird entweder in Einzelteilen oder bereits werkseitig zusammengeführt dem Anwender zur Verwendung zur Verfügung gestellt. Das Schraubmittel, das Anlageelement und/oder das Gegenschraubmittel sind bevorzugt aus Metall, vorteilhafterweise aus einem rostfreien Stahl gefertigt. Je nach den Belastungen und äusseren Bedingungen können das Schraubmittel, das Anlageelement und/oder das Gegenschraubmittel aus einem Kunststoff hergestellt sein.

Vorzugsweise entspricht der Abstand zwischen dem Verbindungsabschnitt und der Befestigungsachse maximal dem Betrag des dreifachen Durchmessers des zweiten Gewindeabschnittes. Durch diese Ausgestaltung können die auftretenden Biegespannungen im Gegenschraubmittel beim Verspannen des Befestigungssystems mit weitgehend geringen Materialstärken des verwendeten Materials zur Fertigung des Gegenschraubmittels übernommen und das Gegenschraubmittel wirtschaftlich hergestellt werden. Vorteilhafterweise entspricht der Abstand zwischen dem Verbindungsabschnitt und der Befestigungsachse weniger als dem Betrag des einfachen Durchmessers des zweiten Gewindeabschnittes, womit das Gegenschraubmittel in der Materialstärke optimiert und somit kostengünstig herstellbar ist. Die gesamten Aussenabmessungen des Gegenschraubmittels können klein gehalten werden, womit das gesamte Befestigungssystem auch bei engen Platzverhältnissen einfach händelbar ist. Vorteilhafterweise ist der Abstand zwischen dem Verbindungsabschnitt und der Befestigungsachse derart gewählt, dass der Betrag der Summe aus dem Aussendurchmesser des Schraubmittels und der Materialstärke des Verbindungsabschnittes des Gegenschraubmittels der Grösse der Öffnung im zweiten Bauteil entspricht. Bei dieser Ausführungsform liegt der Verbindungsabschnitt des Gegenschraubmittels an der Öffnungsbegrenzung im zweiten Bauteil an und die Biegebelastung zwischen dem Hintergreifabschnitt und dem Verbindungsabschnitt des Gegenschraubmittels ist marginal, womit das Gegenschraubmittel bezüglich der Materialstärke optimiert und kostengünstig gefertigt werden kann.

Bevorzugt ist zumindest eine der Oberflächen des Hintergreifabschnitts im Wesentlichen parallel zu einer der Oberflächen des Anlageabschnitts ausgerichtet. Dieses Gegenschraubmittel kann einfach in den Öffnungen des ersten und zweiten Bauteils eingeführt und in diesen verschoben werden. In einer Variante dazu, schliesst eine in der, mit dem Träger in Anlage kommende Oberfläche des Hintergreifabschnitts verlaufende Ebene mit der, von der in Anlage kommende Ebene des Anlageabschnitts einen spitzen Winkel ein, so dass beim Verspannen des Befestigungssystems eine gewisse Federwirkung zwischen dem Gegenschraubmittel und dem zweiten Bauteil geschaffen wird. Diese Federwirkung ist besonders bei dynamischen Belastungen auf das Befestigungssystem vorteilhaft.

Vorteilhafterweise ist an dem Anlageabschnitt des Gegenschraubmittels eine Führungshülse für das Schraubmittel angeordnet. Diese Ausführung des Gegenschraubmittels ist besonders bei grossen Abständen zwischen dem Gegenschraubmittel und dem Anlageelement vorteilhaft, da das Schraubmittel in der Führungshülse insbesondere beim Einführen des Schraubmittels geführt wird und so die Montage des erfindungsgemässen Befestigungssystems erleichtert ist. Bevorzugt ist der zweite Gewindeabschnitt an, beziehungsweise in der Führungshülse ausgebildet. Durch die Verlängerung der Gewindegänge des zweiten Gewindeabschnittes können höhere Belastungen von dem erfindungsgemässen Befestigungssystem übernommen werden.

Vorzugsweise weist das Anlageelement eine im Wesentlichen plattenförmige, im Grundriss beispielsweise rechteckige Ausgestaltung auf, mit einer ersten und einer zweiten, einander gegenüberliegenden Flachseite. Die Aussenabmessungen des Anlageelementes werden derart gewählt, dass das Anlageelement zumindest teilweise, jedoch vorteilhaft an zwei gegenüberliegenden Seiten der Durchführöffnungen in dem ersten Bauteil, beziehungsweise an zumindest einem Elementabschnitt des ersten Bauteils anliegt.

Bevorzugt weist das Anlageelement an zwei seiner gegenüberliegenden Längsseiten Stege auf. Die beiden Stege sind an der gleichen Flachseite des Anlageelementes angeordnet, so dass dieses im Querschnitt durch die Stege eine brückenartige Ausgestaltung aufweist. Die Höhe der Stege wird vorzugsweise derart gewählt, dass der Freiraum zwischen der Oberkante des Anlageabschnittes des Gegenschraubmittels und der Unterkante des Anlageelementes grösser oder zumindest gleich dem Verspannweg ist, den das Gegenschraubmittel zur ausreichenden Befestigung, beziehungsweise Fixierung des ersten Bauteils an dem zweiten Bauteil beim Betätigen des Schraubmittels zurücklegen muss.

Vorteilhafterweise ist an den Stegen des Anlageelementes zumindest ein Vorsprung ausgebildet. Die Breite des zumindest einen Vorsprungs beträgt bevorzugt weniger als die Breite der Durchführöffnung im ersten Bauteil. Dadurch kann der zumindest eine Vorsprung an den Stegen des Anlageelementes in die Durchführöffnung eindringen und beim Betätigen des Schraubmittels als Verdrehsicherung für das Anlageelement dienen. Handelt es sich bei der Durchführöffnung im ersten Bauteil um ein Langloch, bildet der zumindest eine Vorsprung an den Stegen des Anlageelementes eine Führung beim Verschieben des Anlageelementes entlang der Längsachse des Langlochs.

Vorzugsweise sind an den Stegen des Anlageelementes gegeneinander ausgerichtete Rastnasen zum bereichsweisen Halten des Gegenschraubmittels an dem Anlageelement im zusammengeführten Zustand des Anlageelementes und des Gegenschraubmittels ausgebildet. Die Rastnasen bilden eine Verliersicherung und zugleich eine Montagehilfe bei einem Befestigungssystem, bei dem zumindest das Anlageelement und das Gegenschraubmittel zusammengeführt sind.

Ein erfindungsgemässes Gegenschraubmittel mit einem zweiten Gewindeabschnitt, der eine Befestigungsachse definiert, insbesondere für ein zuvor ausgeführtes Befestigungssystem, weist einen einzigen Hintergreifabschnitt und einen einzigen Anlageabschnitt auf, wobei der Hintergreifabschnitt in Richtung der Befestigungsachse zu dem Anlageabschnitt beabstandet und mit dem Anlageabschnitt über einen Verbindungsabschnitt verbunden ist. Das erfindungsgemässe Gegenschraubmittel schafft ein, von aussen zugänglichen zweiten Gewindeabschnitt, in den ein Schraubmittel zur Befestigung eines ersten Bauteils an einem zweiten Bauteil einführbar ist. Des Weiteren kann mit dem erfindungsgemässen Gegenschraubmittel an einem zweiten Bauteil ein Befestigungspunkt geschaffen werden.

Der Hintergreifabschnitt des Gegenschraubmittels ist in die Durchführöffnung des ersten Bauteils und/oder in die Öffnung des zweiten Bauteils, z. B. in die Öffnungen eines Trägers eines Montagesystems, der einen geschlossenen Hohlquerschnitt aufweist, einführbar. Der Anlageabschnitt ist in seinen Abmessungen derart ausgestaltet, dass dieser an dem ersten und/oder an dem zweiten Bauteil anliegt und das Gegenschraubmittel nicht durch die Öffnung am zweiten Bauteil in dieses hineinfallen kann. Das erfindungsgemässe Gegenschraubmittel ist neben nur einseitig zugänglichen, mit Öffnungen versehenen Trägern auch bei jeder Art von Träger anwendbar, sofern dieser mit Öffnungen versehen ist, in die der Hintergreifabschnitt des Gegenschraubmittels einführbar ist. Der Abstand des Hintergreifabschnitts zu dem Anlageabschnitt entspricht zur Befestigung eines ersten Bauteils an einem zweiten Bauteil zumindest der Summe aus der Wandungsstärke des ersten Bauteils und der der Wandungsstärke des zweiten Bauteils.

Mittels des erfindungsgemässen Gegenschraubmittel kann ein, von aussen zugänglicher Befestigungspunkt, beispielsweise für ein Schraubmittel, an einem zweiten Bauteil geschaffen werden. Der Abstand des Hintergreifabschnitts eines solchen Gegenschraubmittels zu dem Anlageabschnitt entspricht zumindest der Wandungsstärke des zweiten Bauteils. Das Hintergreifteil des Gegenschraubmittels wird durch die Öffnung an dem zweiten Bauteil eingeführt. Anschliessend wird ein Schraubmittel mit einem ersten Gewindeabschnitt mit dem zweiten Gewindeabschnitt des Gegenschraubmittels in Eingriff gebracht. Das Schraubmittel wird betätigt und die, das erfindungsgemässe Gegenschraubmittel umfassende Vorrichtung verspannt.

Das mit dem erfindungsgemässen Gegenschraubmittel zusammenwirkende Schraubmittel ist vorzugsweise eine Schraube mit einem, als erster Gewindeabschnitt dienendem Aussengewinde und mit einem Schraubenkopf. An dem Schraubenkopf kann ein, den Aussendurchmesser des Schraubenkopfs vergrössernder Bund oder eine entsprechende Unterlagsscheibe angeordnet sein, beziehungsweise werden.

Der Anlageabschnitt des erfindungsgemässen Gegenschraubmittels ist vorzugsweise im Wesentlichen als Mutter ausgebildet, wobei der zweite Gewindeabschnitt ein, in einer Öffnung angeordnetes Innengewinde ist. In einer Variante dazu, ist an dem Anlageabschnitt des Gegenschraubmittels ein Abschnitt mit einem, als zweiter Gewindeabschnitt dienendes Aussengewinde vorgesehen, an welchem ein zumindest bereichsweise hülsenartig ausgebildetes Schraubmittel, mit einem als erster Gewindeabschnitt ausgebildetes Innengewinde ausgeformt ist, welches mit dem Aussengewinde des Gegenschraubmittels in Eingriff bringbar ist.

Vorzugsweise entspricht der Abstand zwischen dem Verbindungsabschnitt und der Befestigungsachse maximal dem Betrag des dreifachen Durchmessers des zweiten Gewindeabschnittes. Durch diese Ausgestaltung können die auftretenden Biegespannungen im Gegenschraubmittel beim Verspannen mittels eines Schraubmittels mit weitgehend geringen Materialstärken des verwendeten Materials zur Fertigung des Gegenschraubmittels übernommen und das Gegenschraubmittel wirtschaftlich hergestellt werden. Vorteilhafterweise entspricht der Abstand zwischen dem Verbindungsabschnitt und der Befestigungsachse weniger als dem Betrag des einfachen Durchmessers des zweiten Gewindeabschnittes, womit das Gegenschraubmittel in der Materialstärke optimiert werden kann und somit kostengünstig herstellbar ist. Die gesamten Aussenabmessungen des Gegenschraubmittels können klein gehalten werden, womit dieses auch bei engen Platzverhältnissen einfach händelbar ist.

Bevorzugt ist zumindest eine der Oberflächen des Hintergreifabschnitts im Wesentlichen parallel zu einer der Oberflächen des Anlageabschnitts ausgerichtet. Diese Ausführungsform des erfindungsgemässen Gegenschraubmittels kann einfach in den Öffnungen des ersten und/oder zweiten Bauteils eingeführt und in diesen verschoben werden. In einer Variante dazu, schliesst eine in der, mit dem Träger in Anlage kommende Oberfläche des Hintergreifabschnitts verlaufende Ebene mit der, von der in Anlage kommende Ebene des Anlageabschnitts einen spitzen Winkel ein, so dass beim Verspannen des Befestigungssystems eine gewisse Federwirkung zwischen dem Gegenschraubmittel und dem zweiten Bauteil geschaffen wird. Diese Federwirkung ist besonders bei dynamischen Belastungen auf das Befestigungssystem vorteilhaft.

Vorteilhafterweise ist an dem Anlageabschnitt des Gegenschraubmittels eine Führungshülse für ein Schraubmittel angeordnet. Die Führungshülse des erfindungsgemässen Gegenschraubmittels ermöglicht die Führung eines Schraubmittels, wie eine Schraube mit einem Aussengewinde und Schraubenkopf, beim Einführen desselben, so dass die Montage der Schraubverbindung erleichtert wird. Bevorzugt ist der zweite Gewindeabschnitt an, beziehungsweise in der Führungshülse ausgebildet. Durch die Verlängerung der Gewindegänge des zweiten Gewindeabschnittes gegenüber den zuvor beschriebenen Ausführungen des erfindungsgemässen Gegenschraubmittels können höhere Belastungen von diesem übernommen werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1: Eine perspektivische Ansicht eines Trägers eines Montagesystems mit mehreren an diesem, mittels des erfindungsgemässen Befestigungssystem befestigten Bauteilen;
- Fig. 2: eine perspektivische Ansicht eines ersten Ausführungsbeispiel des erfindungsgemässen Befestigungssystem;
- Fig. 3: eine Seitenansicht des in Fig. 2 dargestellten Befestigungssystems in Explosionsdarstellung;
- Fig. 4a-c: einen Längsschnitt entlang der Linie IV-IV in Fig. 1 durch das in der Fig. 2 dargestellten Befestigungssystems in drei Montageschritten;
- Fig. 5: einen Querschnitt entlang der Linie V-V in Fig. 1;
- Fig. 6: eine Ansicht eines zweiten Ausführungsbeispiels des Hintergreifteils des erfindungsgemässen Befestigungssystems; und
- Fig. 7: eine Teilansicht eines erfindungsgemässen Gegenschraubmittels.

Grundsätzlich sind in den Figuren gleiche Teile mit den gleichen Bezugszeichen versehen.

### Wege zur Ausführung der Erfindung

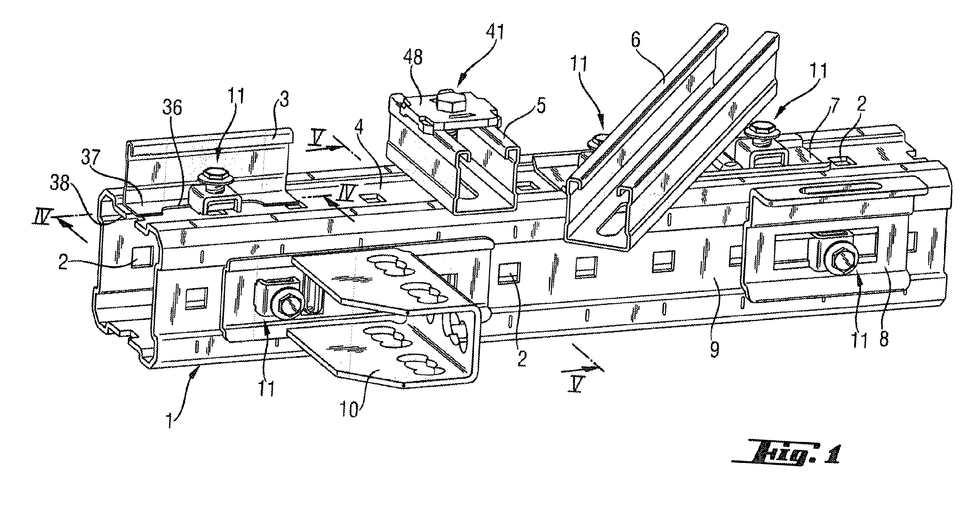

In der Fig. 1 ist ein Träger 1 eines Montagesystems gezeigt, der einen im Querschnitt geschlossenen Hohlquerschnitt und an seinen Aussenwandungen mehrere, in einem definierten Abstand angeordnete Öffnungen 2 aufweist. An dem, das zweite Bauteil bildenden Träger 1 sind verschiedene Beispiele von ersten Bauteilen mittels erfindungsgemässen Befestigungssystemen 11, bzw. 41 befestigt.

Beispielsweise ist ein Abschnitt 3 einer C-förmigen Montageschiene in einer Vertiefung 4 an der Aussenseite des Trägers 1 mit dem erfindungsgemässen Befestigungssystem 11 befestigt. Eine nur abschnittsweise dargestellte C-förmige Montageschiene 5 ist im Wesentlichen rechtwinklig zu der Längsachse der Vertiefung 4 an der Aussenseite des Trägers 1 mit dem erfindungsgemässen Befestigungssystem 41 befestigt. Eine, in einem Winkel zu der Längsachse der Vertiefung 4 an der Aussenseite des Trägers 1 verlaufende C-förmige Montageschiene 6 ist an einem Montageteil 7 fixiert, welches in der Vertiefung 4 an der Aussenseite des Trägers 1 angeordnet und mittels zwei erfindungsgemässen Befestigungssystemen 11 an dem Träger 1 befestigt ist. Ein Winkelelement 8 beispielsweise zur Befestigung eines Rohrbogens ist in der Vertiefung 9 an einer anderen Aussenseite des Trägers 1 mittels eines erfindungsgemässen Befestigungssystems 11 befestigt. Als letztes, jedoch nicht abschliessendes Beispiel eines ersten Bauteils ist in der Vertiefung 9 an einer anderen Aussenseite des Trägers 1 ein Anschlusselement 10 für den Anschluss eines weiteren Trägers oder einer Montageschiene mittels zumindest eines erfindungsgemässen Befestigungssystems 11 an dem Träger 1 befestigt.

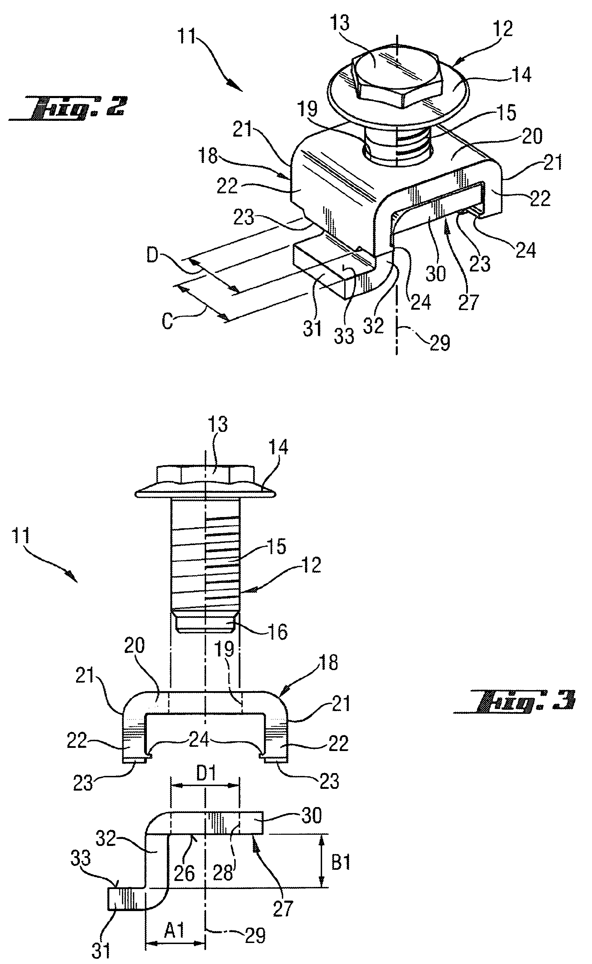

Die Fig. 2 und Fig. 3 zeigen jeweils ein erstes Ausführungsbeispiel des erfindungsgemässen Befestigungssystems. Das Befestigungssystem 11 umfasst ein Schraubmittel 12, das als Drehübertragungsmittel 13 einen Sechskant-Schraubenkopf aufweist, an welchem ein, als Betätigungsmittel für das Schraubmittel 12 dienender Schraubenschlüssel in Angriff bringbar ist. An dem Schraubenkopf ist ein Bund 14 ausgeformt. Weiter ist das Schraubmittel 12 mit einem als erster Gewindeabschnitt 15 ausgebildetem Aussengewinde versehen.

Weiter umfasst das Befestigungssystem 11 ein Anlageelement 18, welches eine Durchführöffnung 19 zum Durchführen des Schraubmittels 12 aufweist, die in einem plattenförmigen Abschnitt 20 des Anlageelementes 18 ausgebildet ist. An zwei sich gegenüberliegenden Längsseiten 21 des plattenförmigen Abschnitts 20 sind zwei Stege 22 angeordnet, welche jeweils einen Vorsprung 23 aufweisen. Die Stege 22 bilden mit dem plattenförmigen Abschnitt 20 eine brückenartige Ausgestaltung des Anlageelementes 18. An den Stegen 22 sind jeweils zwei, gegeneinander ausgerichtete Rastnasen 24 ausgebildet.

Weiter umfasst das Befestigungssystem 11 ein Gegenschraubmittel 27 mit einem, den zweiten Gewindeabschnitt 28 bildenden Innengewinde, welches eine Befestigungsachse 29 definiert und mit dem ersten Gewindeabschnitt 15 des Schraubmittels 12 in Eingriff bringbar ist. Das Gegenschraubmittel 27 umfasst einen Hintergreifabschnitt 31 und einen Anlageabschnitt 30, wobei der Hintergreifabschnitt 31 in Richtung der Befestigungsachse 29 zu dem Anlageabschnitt 30 beabstandet ist und mit diesem über den Verbindungsabschnitt 32 verbunden ist. Die Oberfläche 33 des Hintergreifabschnitts 31 des Gegenschraubmittels 27 verläuft im Wesentlichen parallel zu der Oberfläche 26 des Anlageabschnitts 30 des Gegenschraubmittels 27.

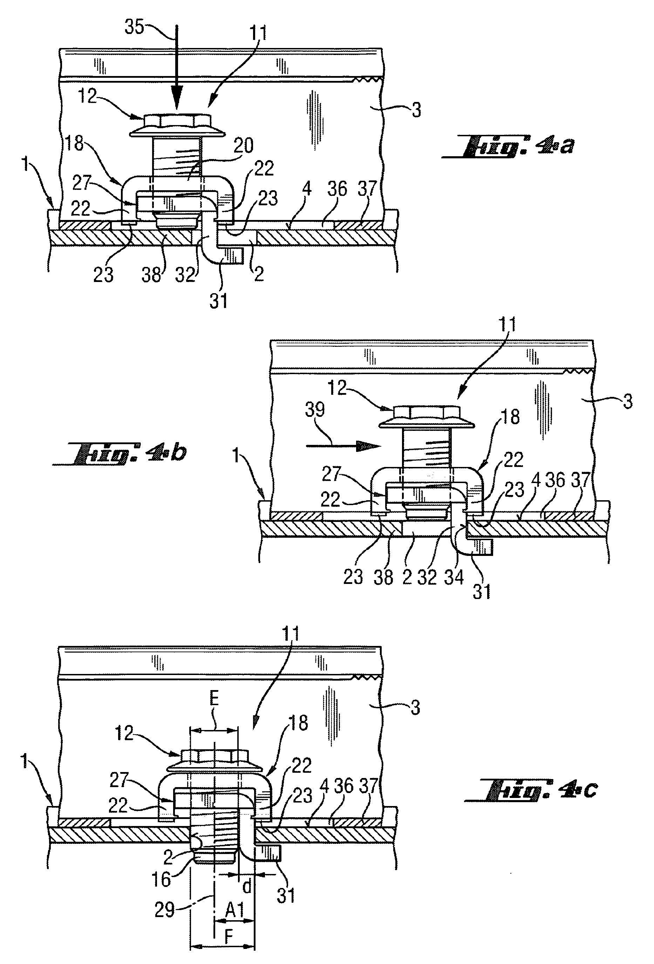

In den Fig. 4a bis 4c ist als Beispiel für einen Montagevorgang die Befestigung der C-förmigen Montageschiene 3 als erstes Bauteil an dem Träger 1 als zweites Bauteil dargestellt. Das Befestigungssystem 11 ist werkseitig aus dem Schraubmittel 12, dem Anlageelement 18 und dem Gegenschraubmittel 27 zu einer, dem Anwender als Ganzes zur Verfügung gestellte Vorrichtung zusammengesetzt. Die C-förmige Montageschiene 3 weist an ihrem Bodenabschnitt 37 mehrere Langlöcher 36 auf. Die C-förmige Montageschiene 3 wird in der Vertiefung 4 an der Aussenseite des Trägers derart angeordnet, dass eines der Langlöcher 36 im Bodenabschnitt 37 der C-förmigen Montageschiene 3 über einer der Öffnungen 2 an der Aussenseite des Trägers 1 zu liegen kommt.

Das Befestigungssystem 11 wird als Ganzes in Richtung des Pfeils 35 in die zu verbindenden Bauteile eingeführt, so dass der Hintergreifabschnitt 31 des Gegenschraubmittels 27 durch das Langloch 36 und die Öffnung 2 hindurchgeführt ist und im Innern des Trägers 1 zu liegen kommt. Der Abstand B1 zwischen dem Hintergreifteil 31 und dem Anlageabschnitt 30 des Gegenschraubmittels 27 beträgt zumindest dem Betrag der Summe aus der Wandstärke der Aussenwandung 38 des Trägers 1 und der Wandstärke des Bodenabschnittes 37 der C-förmigen Montageschiene 3. Die Breite C des Hintergreifteils 31 ist etwas kleiner als die entsprechende lichte Weite der Öffnung 2 in der Aussenwandung 38 des Trägers 1 ausgebildet.

Das Anlageelement 18 liegt mit den Stegen 22 an dem Bodenabschnitt 37 der C-förmigen Montageschiene 3 an, wobei die, an den Stegen 22 ausgebildeten Vorsprünge 23 in die, von dem Langloch 36 gebildete Öffnung im Bodenabschnitt 37 der C-förmigen Montageschiene 3 eindringen und als Führung sowie als Verdrehsicherung für das Anlageelement 18 dienen. Die Breite D der Vorsprünge 23 ist etwas kleiner als die lichte Breite des Langlochs 36 im Bodenabschnitt 37 der C-förmigen Montageschiene 3 ausgebildet.

Anschliessend wird das Befestigungssystem 11, wie in Fig. 4b dargestellt, in Richtung des Pfeils 39 verschoben, bis der Verbindungsabschnitt 32 des Gegenschraubmittels 27 an der Wandung 34 der Öffnung 2 in der Aussenwandung 38 des Trägers 1 ansteht. Dabei hintergreift der Hintergreifabschnitt 31 einen Bereich der Aussenwandung 38 des Trägers 1. Mittels den Vorsprüngen 23 an den Stegen 22 des Anlageelementes 18 wird das Befestigungssystem 11 beim Verschieben in dem Langloch 36 im Bodenabschnitt 37 der C-förmigen Montageschiene 3 geführt.

Mittels Betätigung des Schraubmittels 12 wird das Gegenschraubmittel 27 gegen das, sich am Bodenabschnitt 37 der C-förmigen Montageschiene 3 abstützende Anlageelement 18 gezogen. Dabei wird der Hintergreifabschnitt 31 mit der Aussenwandung 38 fest in Anlage gebracht und das Befestigungssystem 11 verspannt, womit die C-förmigen Montageschiene 3 als erstes Bauteil an dem Träger 1 als zweites Bauteil lösbar befestigt ist.

Der Abstand A1 zwischen dem Verbindungsabschnitt 32 des Gegenschraubmittels 27 und der Befestigungsachse 29 ist derart gewählt, dass die Summe aus dem Betrag des Aussendurchmessers E des ersten Gewindeabschnitts 15 an dem Schraubmittel 12 und der Materialstärke d des Verbindungsabschnitts 32 etwa der lichten Weite F der Öffnung 2 im Träger 1 entspricht. Das Schraubmittel 12 ist an dem, von dem Drehmomentübertragungsmittel 13 abgewandten Ende mit einem abgesetzten Bund 16 versehen, der das Einführen des Schraubmittels in die Öffnung 2 am Träger 1 erleichtert. Ist der Betrag der lichten Weite F der Öffnung 2 etwas kleiner als die Summe aus dem Betrag des Aussendurchmessers E des ersten Gewindeabschnitts 15 an dem Schraubmittel 12 und der Materialstärke d des Verbindungsabschnitts 32 kann sich das Befestigungssystem 11 mit dem Träger 1 beim Eindrehen des Schraubmittels 12 verspannen.

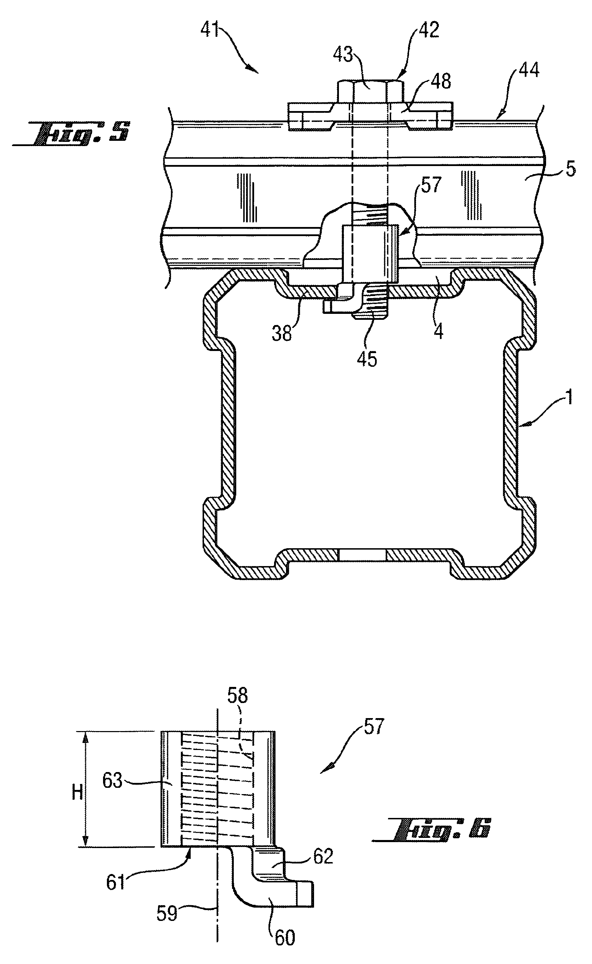

In der Fig. 5 ist ein zweites Ausführungsbeispiel der Erfindung mit dem Befestigungssystem 41 gezeigt. Das Befestigungssystem 41 weist eine als Schraubmittel 42 ausgebildete Schraube mit einem als Drehmomentübertragungsmittel 43 ausgebildeten Schraubenkopf und einem als erster Gewindeabschnitt 45 dienendes Aussengewinde auf. Das Befestigungssystem 41 umfasst weiter ein plattenförmiges, rechteckiges Anlageelement 48, welches an der offenen Seite 44 der C-förmige Montageschiene 5 anliegt, sowie ein Gegenschraubmittel 57. Das, in der Fig. 6 in der Ansicht dargestellte, Gegenschraubmittel 57 weist wie das Gegenschraubmittel 27 einen Anlageabschnitt 61, einen Hintergreifabschnitt 60 sowie einen, den Hintergreifabschnitt 60 und den Anlageabschnitt 61 verbindenden Verbindungsabschnitt 62 auf. An dem Anlageabschnitt 61 ist eine Führungshülse 63 mit der Höhe H für das Schraubmittel 42 angeordnet, welche ein als zweiter Gewindeabschnitt 58 ausgebildetes Innengewinde aufweist. Der zweite Gewindeabschnitt 58 definiert eine Befestigungsachse 59.

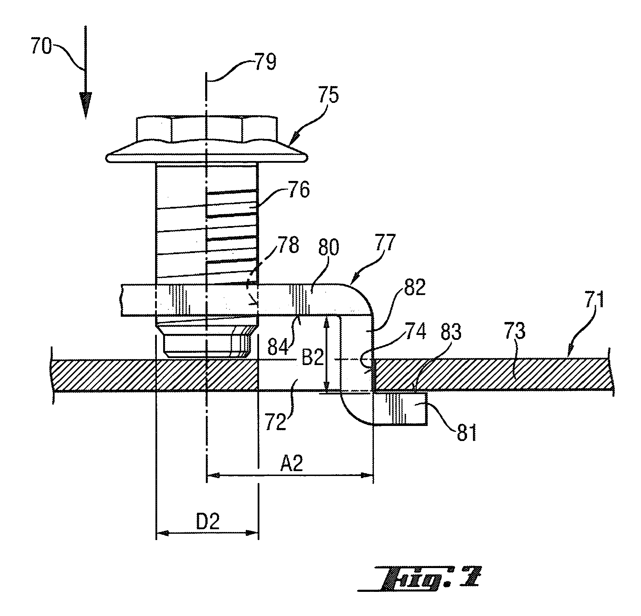

Das Gegenschraubmittel 27 und das Gegenschraubmittel 57 können beide als eigenständige Elemente für eine herkömmliche Befestigungsvorrichtung dienen. Ein weiteres Ausführungsbeispiel eines erfindungsgemässen Gegenschraubmittels ist in der Fig. 7 gezeigt. Das Gegenschraubmittel 77 weist ein, den zweiten Gewindeabschnitt 78 bildendes Innengewinde auf, welches eine Befestigungsachse 79 definiert. Das Gegenschraubmittel 77 umfasst ebenfalls einen Hintergreifabschnitt 81 und einen Anlageabschnitt 80, wobei der Hintergreifabschnitt 81 in Richtung der Befestigungsachse 79 zu dem Anlageabschnitt 80 beabstandet ist und mit diesem über den Verbindungsabschnitt 82 verbunden ist.

Der Abstand A2 zwischen dem Verbindungsabschnitt 82 und der Befestigungsachse 79 entspricht etwa dem Betrag des zweifachen Durchmessers D2 des zweiten Gewindeabschnittes 78. Die Oberfläche 83 des Hintergreifabschnitts 81 des Gegenschraubmittels 77 verläuft im Wesentlichen parallel zu der Oberfläche 84 des Anlageabschnitts 80 des Gegenschraubmittels 27.

Das Gegenschraubmittel 77 wird in Richtung des Pfeils 70 in die Öffnung 72 des Trägers 71 eingeführt, so dass der Hintergreifabschnitt 81 des Gegenschraubmittels 77 im Innern des Trägers 71 zu liegen kommt. Der Abstand B2 zwischen dem Hintergreifteil 81 und dem Anlageabschnitt 80 des Gegenschraubmittels 77 beträgt zumindest den Betrag der Wandstärke der Aussenwandung 73 des Trägers 71. Anschliessend wird das Gegenschraubmittel 77 verschoben, bis der Verbindungsabschnitt 82 des Gegenschraubmittels 77 an der Wandung 74 der Öffnung 72 in der Aussenwandung 73 des Trägers 71 ansteht. Dabei hintergreift der Hintergreifabschnitt 81 einen Bereich der Aussenwandung 73. Ein Schraubmittel 75 mit einem ersten Gewindeabschnitt 76 wird mit dem zweiten Gewindeabschnitt 78 des Gegenschraubmittels 77 in Eingriff gebracht. Bei der weiteren Betätigung des Schraubmittels 75 steht dieses an der Aussenwandung 73 des Trägers 71 an und der Anlageabschnitt 80 des Gegenschraubmittels 77 wird entgegen der Richtung des Pfeils 70 gezogen. Dabei wird der Hintergreifabschnitt 81 mit der Aussenwandung 73 fest in Anlage gebracht und das Gegenschraubmittel 77 an dem Träger 71 verspannt.

## Patentansprüche

1. Befestigungssystem zum Befestigen eines ersten Bauteils an einem zweiten Bauteil, insbesondere zum Befestigen eines ersten Bauteils an einem Träger (1) eines Montagesystems, mit einem ein Drehmomentübertragungsmittel (13; 43) aufweisendem Schraubmittel (12; 42), wobei das Schraubmittel (12; 42) zumindest bereichsweise einen ersten Gewindeabschnitt (15; 45) aufweist, einem Anlageelement (18; 48) zur Anlage an einem der Bauteile, wobei das Anlageelement (18; 48) eine Durchführöffnung (19) zum Durchführen des Schraubmittels (12; 42) aufweist, und einem Gegenschraubmittel (27; 57; 77) mit einem zweiten Gewindeabschnitt (28; 58; 78), der eine Befestigungsachse (29; 59; 79) definiert und der mit dem ersten Gewindeabschnitt (15; 45) des Schraubmittels (12; 42) in Eingriff bringbar ist, **dadurch gekennzeichnet, dass** das Gegenschraubmittel (27; 57; 77) einen einzigen Hintergreifabschnitt (31; 61; 81) und einen einzigen Anlageabschnitt (30; 60; 80) aufweist, wobei der Hintergreifabschnitt (31; 61; 81) in Richtung der Befestigungsachse (29; 59; 79) zu dem Anlageabschnitt (30; 60; 80) beabstandet und mit dem Anlageabschnitt (30; 60; 80) über einen Verbindungsabschnitt (32; 62; 82) verbunden ist.

2. Befestigungssystem nach Anspruch 1, **dadurch gekennzeichnet, dass** der Abstand (A1; A2) zwischen dem Verbindungsabschnitt (32; 82) und der Befestigungsachse (29; 79) maximal dem Betrag des dreifachen Durchmessers (D1; D2) des zweiten Gewindeabschnittes (28; 78) entspricht, vorzugsweise weniger als dem Betrag des einfachen Durchmessers (D1; D2) des zweiten Gewindeabschnittes (28; 78).

3. Befestigungssystem nach Anspruch 1 oder 2, **dadurch gekennzeichnet, dass** zumindest eine der Oberflächen (33; 83) des Hintergreifabschnitts (31; 61; 81) im Wesentlichen parallel zu zumindest einer der Oberflächen (26; 84) des Anlageabschnitts (30; 60; 80) ausgerichtet ist.

4. Befestigungssystem nach einem der Ansprüche 1 bis 3, **dadurch gekennzeichnet, dass** an dem Anlageabschnitt (60) des Gegenschraubmittels (57) eine Führungshülse (63) für das Schraubmittel (42), optional mit einem zweiten Gewindeabschnitt (58), angeordnet ist.

5. Befestigungssystem nach einem der Ansprüche 1 bis 4, **dadurch gekennzeichnet, dass** das Anlageelement (48) eine im Wesentlichen plattenförmige Ausgestaltung aufweist.

6. Befestigungssystem nach einem der Ansprüche 1 bis 5, **dadurch gekennzeichnet, dass** das Anlageelement (18) an zwei seiner gegenüberliegenden Längsseiten (21) Stege (22) aufweist.

7. Befestigungssystem nach Anspruch 6, **dadurch gekennzeichnet, dass** an den Stegen (22) des Anlageelementes (18) zumindest ein Vorsprung (23) ausgebildet ist.

8. Befestigungssystem nach Anspruch 6 oder 7, **dadurch gekennzeichnet, dass** an den Stegen (22) des Anlageelementes (18) gegeneinander ausgerichtete Rastnasen (23) zum bereichsweisen Halten des Gegenschraubmittels (27) an dem Anlageelement (18) im zusammengeführten Zustand des Anlageelementes (18) und des Gegenschraubmittels (27) ausgebildet sind.

9. Gegenschraubmittel mit einem zweiten Gewindeabschnitt (28; 58; 78), der eine Befestigungsachse (29; 59; 79) definiert, insbesondere für ein Befestigungssystem (11; 41) nach den Ansprüchen 1 bis 8, **dadurch gekennzeichnet, dass** das Gegenschraubmittel (27; 57; 77) einen einzigen Hintergreifabschnitt (31; 61; 81) und einen einzigen Anlageabschnitt (30; 60; 80) aufweist, wobei der Hintergreifabschnitt (31; 61; 81) in Richtung der Befestigungsachse (29; 59; 79) zu dem Anlageabschnitt (30; 60; 80) beabstandet ist und mit dem Anlageabschnitt (30; 60; 80) über einen Verbindungsabschnitt (32; 62; 82) verbunden ist.

10. Gegenschraubmittel nach Anspruch 9, **dadurch gekennzeichnet, dass** der Abstand (A1; A2) zwischen dem Verbindungsabschnitt (32; 62; 82) und der Befestigungsachse (29; 59; 79) maximal dem Betrag des dreifachen Durchmessers (D1; D2) des zweiten Gewindeabschnittes (28; 58; 78) entspricht, vorzugsweise weniger als dem Betrag des einfachen Durchmessers (D1; D2), des zweiten Gewindeabschnittes (28; 58; 78).

11. Gegenschraubmittel nach Anspruch 9 oder 10, **dadurch gekennzeichnet, dass** zumindest eine der Oberflächen (33; 83) des Hintergreifabschnitts (31; 61; 81) im Wesentlichen parallel zu zumindest einer der Oberflächen (26; 84) des Anlageabschnitts (30; 60; 80) ausgerichtet ist.

12. Gegenschraubmittel nach einem der Ansprüche 9 bis 11, **dadurch gekennzeichnet, dass** an dem Anlageabschnitt (60) des Gegenschraubmittels (57) eine Führungshülse (63) für ein Schraubmittel, optional mit einem zweiten Gewindeabschnitt (58), angeordnet ist.

## Claims

1. A fastening system for fixing a first component to a second component, particularly for fixing a first component to a support (I) of a mounting system, said fastening system comprising: screw means (12; 42) with torque-transmitting means (13; 43), said screw means (12; 42) having, at least in part, a first threaded portion (15; 45); a bearing element (18; 48) for bearing against one of the components, said bearing element (18; 48) having a through opening (19) through which the screw means (12; 42) are guided; and counter screw means (27; 57; 77) with a second threaded portion (28; 58; 78) which defines a fastening axis (29; 59; 79) and which can be brought into engagement with the first threaded portion (15; 45) of the screw means (12; 42), **characterized in that** the counter screw means (27; 57; 77) comprise a single rear engagement portion (31; 61; 81) and a single bearing portion (30; 60; 80), the rear engagement portion (31; 61; 81) being at a distance from the bearing portion (30; 60; 80) in direction of the fastening axis (29; 59; 79) and being attached to the bearing portion (30; 60; 80) by a connecting portion (32; 62; 82).

2. A fastening system according to Claim 1, **characterized in that** the distance (A1; A2) between the connecting portion (32; 82) and the fastening axis (29; 79) corresponds at most to three times the diameter (D1; D2) of the second threaded portion (28; 78), and preferably to less than the diameter (D1; D2) of the second threaded portion (28; 78).

3. A fastening system according to Claim 1 or 2, **characterized in that** at least one of the surfaces (33; 83) of the rear engagement portion (31; 61; 81) is oriented substantially parallel to at least one of the surfaces (26; 84) of the bearing portion (30; 60; 80).

4. A fastening system according to one of Claims 1 to 3, **characterized in that** a guide sleeve (63) for the screw means (42), optionally having a second threaded portion (58), is provided on the bearing portion (60) of the counter screw means (57).

5. A fastening system according to one of Claims 1 to 4, **characterized in that** the bearing element (48) has a substantially plate-shaped structure.

6. A fastening system according to one of Claims 1 to 5, **characterized in that** the bearing element (18) has flanges (22) on two of its opposite longitudinal sides (21).

7. A fastening system according to Claim 6, **characterized in that** at least one projection (23) is formed on the flanges (22) of the bearing element (18).

8. A fastening system according to Claim 6 or 7, **characterized in that** snap-in lugs (23) oriented towards one another are formed on the flanges (22) of the bearing element (18) for holding the counter screw means (27) in certain areas against the bearing element (18) when the bearing element (18) and counter screw means (27) are brought together.

9. Counter screw means having a second threaded portion (28; 58; 78), which defines a fastening axis (29; 59; 79), in particular for a fastening system (11; 41) according to Claims I to 8, **characterized in that** the counter screw means (27; 57; 77) comprise a single rear engagement portion (31; 61; 81) and a single bearing portion (30, 60, 80), the rear engagement portion (31; 61; 81) being at a distance from the bearing portion (30; 60; 80) in direction of the fastening axis (29; 59; 79) and being attached to the bearing portion (30; 60; 80) by a connecting portion (32; 62; 82).

10. Counter screw means according to Claim 9, **characterized in that** the distance (Al; A2) between the connecting portion (32; 62; 82) and the fastening axis (29; 59; 79) corresponds at most to three times the diameter (D1; D2) of the second threaded portion (28; 58; 78), and preferably to less than the diameter (D1; D2) of the second threaded portion (28; 58; 78).

11. Counter screw means according to Claim 9 or 10, **characterized in that** at least one of the surfaces (33; 83) of the rear engagement portion (31; 61; 81) is oriented substantially parallel to at least one of the surfaces (26; 84) of the bearing portion (30; 60; 80).

12. Counter screw means according to one of Claims 9 to 11, **characterized in that** a guide sleeve (63) for the screw means, optionally having a second threaded portion (58), is provided on the bearing portion (60) of the counter screw means (57).

## Revendications

1. Système de fixation destiné à fixer un premier composant sur un second composant, en particulier destiné à fixer un premier composant sur un support (1) d'un système de montage, avec un moyen de vissage (12 ; 42) présentant un moyen de transmission de couple (13 ; 43), sachant que le moyen de vissage (12 ; 42) présente au moins par endroits une première section filetée (15 ; 45), avec un élément d'appui (18 ; 48) pour l'appui contre l'un des composants, sachant que l'élément d'appui (18 ; 48) présente une ouverture de passage (19) pour le passage du moyen de vissage (12 ; 42), et avec un moyen de vissage antagoniste (27 ; 57 ; 77) doté d'une seconde section filetée (28 ; 58 ; 78) qui définit un axe de fixation (29 ; 59 ; 79) et qui peut être amené en engagement avec la première section filetée (15 ; 45) du moyen de vissage (12 ; 42), **caractérisé en ce que** le moyen de vissage antagoniste (27 ; 57 ; 77) présente une seule section d'engagement arrière (31 ; 61 ; 81) et une seule section d'appui (30 ; 60 ; 80), dans lesquels la section d'engagement arrière (31 ; 61 ; 81) est espacée de la section d'appui (30 ; 60 ; 80) en direction de l'axe de fixation (29 ; 59 ; 79) et est reliée à la section d'appui (30 ; 60 ; 80) par une section de liaison (32 ; 62 ; 82).

2. Système de fixation selon la revendication 1, **caractérisé en ce que** la distance (A1 ; A2) entre la section de liaison (32 ; 82) et l'axe de fixation (29 ; 79) correspond au maximum à la valeur du triple diamètre (D1 ; D2) de la seconde section filetée (28 ; 78), de préférence est inférieure à la valeur du simple diamètre (D1 ; D2) de la seconde section filetée (28 ; 78).

3. Système de fixation selon la revendication 1 ou 2, **caractérisé en ce qu'**au moins l'une des surfaces (33 ; 83) de la section d'engagement arrière (31 ; 61 ; 81) est orientée sensiblement parallèlement à au moins l'une des surfaces (26 ; 84) de la section d'appui (30 ; 60 ; 80).

4. Système de fixation selon l'une quelconque des revendications 1 à 3, **caractérisé en ce qu'**une douille de guidage (63) pour le moyen de vissage (42), facultativement avec une seconde section filetée (58), est disposée sur la section d'appui (60) du moyen de vissage antagoniste (57).

5. Système de fixation selon l'une quelconque des revendications 1 à 4, **caractérisé en ce que** l'élément d'appui (48) présente une configuration sensiblement en forme de plaque.

6. Système de fixation selon l'une quelconque des revendications 1 à 5, **caractérisé en ce que** l'élément d'appui (18) présente des nervures (22) sur deux de ses côtés longitudinaux opposés (21).

7. Système de fixation selon la revendication 6, **caractérisé en ce qu'**au moins une saillie (23) est réalisée sur les traverses (22) de l'élément d'appui (18).

8. Système de fixation selon la revendication 6 ou 7, **caractérisé en ce que** des nez d'encliquetage (23) orientés l'un contre l'autre sur les nervures (22) de l'élément d'appui (18) sont réalisés pour le maintien par endroits du moyen de vissage antagoniste (27) sur l'élément d'appui (18) à l'état réuni de l'élément d'appui (18) et du moyen de vissage antagoniste (27).

9. Moyen de vissage antagoniste doté d'une seconde section filetée (28 ; 58 ; 78) qui définit un axe de fixation (29 ; 59 ; 79), en particulier pour un système de fixation (11 ; 41) selon les revendications 1 à 8, **caractérisé en ce que** le moyen de vissage antagoniste (27 ; 57 ; 77) présente une seule section d'engagement arrière (31 ; 61 ; 81) et une seule section d'appui (30 ; 60 ; 80), dans lesquels la section d'engagement arrière (31 ; 61 ; 81) est espacée de la section d'appui (30 ; 60 ; 80) en direction de l'axe de fixation (29 ; 59 ; 79) et est reliée à la section d'appui (30 ; 60 ; 80) par une section de liaison (32 ; 62 ; 82).

10. Moyen de vissage antagoniste selon la revendication 9, **caractérisé en ce que** la distance (A1 ; A2) entre la section de liaison (32 ; 62 ; 82) et l'axe de fixation (29 ; 59 ; 79) correspond au maximum à la valeur du triple diamètre (D1 ; D2) de la seconde section filetée (28 ; 58 ; 78), de préférence est inférieure à la valeur du simple diamètre (D1 ; D2) de la seconde section filetée (28 ; 58 ; 78).

11. Moyen de vissage antagoniste selon la revendication 9 ou 10, **caractérisé en ce qu'**au moins l'une des surfaces (33 ; 83) de la section d'engagement arrière (31 ; 61 ; 81) est orientée sensiblement parallèlement à au moins l'une des surfaces (26 ; 84) de la section d'appui (30 ; 60 ; 80).

12. Moyen de vissage antagoniste selon l'une quelconque des revendications 9 à 11, **caractérisé en ce qu'**une douille de guidage (63) pour un moyen de vissage, facultativement avec une seconde section filetée (58), est disposée sur la section d'appui (60) du moyen de vissage antagoniste (57).
